# EUROPÄISCHE PATENTSCHRIFT

(11) **EP 3 799 946 B1**
(45) Veröffentlichungstag und Bekanntmachung des Hinweises auf die Patenterteilung: **14.08.2024**
(21) Anmeldenummer: 20203045.8
(22) Anmeldetag: 28.08.2008
(51) Int. Cl.: B01D 53/94, F01N 3/035, B01J 23/63, B01J 35/56, B01J 37/02, B01J 23/56

(54) **VERWENDUNG EINER ABGASREINIGUNGSANLAGE ZUR REINIGUNG DER ABGASE VON MIT ÜBERWIEGEND STÖCHIOMETRISCHEM LUFT/KRAFTSTOFF-GEMISCHBETRIEBENEN VERBRENNUNGSMOTOREN**
USE OF AN EXHAUST GAS PURIFYING INSTALLATION FOR PURIFYING EXHAUST GASES OF COMBUSTION ENGINES PRIMARILY POWERED BY STOICHIOMETRIC AIR/FUEL MIXTURE
UTILISATION D'UNE INSTALLATION D'ÉPURATION DE GAZ D'ÉCHAPPEMENT POUR PURIFIER DE GAZ D'ÉCHAPPEMENT DE MOTEURS À COMBUSTION INTERNE FONCTIONNANT ESSENTIELLEMENT SUR UN MÉLANGE D'AIR/CARBURANT STÖCHIOMÉTRIOUE

(30) Priorität: 27.09.2007 DE 102007046158
(43) Veröffentlichungstag der Anmeldung: 07.04.2021
(62) Teilanmeldung aus: 19158169.3
(73) Patentinhaber: Umicore AG & Co. KG, 63457 Hanau-Wolfgang (DE)
(72) Erfinder: KLINGMANN, Raoul, 63755 Alzenau (DE); ROESCH, Martin, 63110 Rodgau (DE); LINDNER, Dieter, verstorben (DE)

(56) Entgegenhaltungen:
- EP-A1- 1 181 970
- DE-A1- 10 024 994
- DE-A1- 19 901 760
- JP-A- 2007 239 500

## Beschreibung

Die Erfindung betrifft eine Verwendung einer Abgasreinigungsanlage zur Reinigung der Abgase von mit überwiegend stöchiometrischem Luft/Kraftstoff-Gemisch betriebenen Verbrennungsmotoren.

Abgase von mit überwiegend mit stöchiometrischem Luft/Kraftstoff-Gemisch betriebenen Verbrennungsmotoren werden in herkömmlichen Verfahren mit Hilfe von Dreiwege-Katalysatoren gereinigt. Diese sind in der Lage, die drei wesentlichen gasförmigen Schadstoffe des Motors, nämlich Kohlenwasserstoffe, Kohlenmonoxid und Stickoxide, gleichzeitig zu unschädlichen Komponenten umzusetzen. Außer den gasförmigen Schadstoffen Kohlenwasserstoffe (HC), Kohlenmonoxid (CO) und Stickoxide (NOₓ) enthält das Abgas von Benzinmotoren auch feinste Partikel (PM), die aus der unvollständigen Verbrennung des Kraftstoffs resultieren und im wesentlichen aus Ruß bestehen.

Im Unterschied zur Partikelemission von Dieselmotoren sind die Partikel im Abgas überwiegend stöchiometrisch betriebener Benzinmotoren sehr klein, d.h. sie weisen eine durchschnittliche Partikelgröße kleiner 1 µm auf. Typische Partikelgrößen liegen im Bereich 10 bis 100 nm. Aufgrund des von lungengängigen Kleinstpartikeln ("Feinstaub") ausgehenden Gesundheitsgefährdungspotentials wird es bereits mit der Einführung der EU-5-Abgasnorm in Europa ab 2010 eine Limitierung der zugelassenen Partikelemission auch für Benzinmotoren geben. Infolge der Umstellung der Partikelmeßverfahren von die Partikelmasse erfassenden Verfahren auf Partikelzählverfahren ist für die darauffolgende europäische Abgasnorm EU-6 mit einer Umstellung des Grenzwertes vom Partikelmassengrenzwert auf einen kritischeren Partikelzahlgrenzwert zu rechnen. Demzufolge werden künftige Abgasreinigungskonzepte für stöchiometrisch betriebene Verbrennungsmotoren auch effektiv arbeitende Einrichtungen zur Entfernung von Partikeln enthalten müssen.

Verfahren und Vorrichtungen zur Entfernung von Partikel aus dem Abgas von Dieselmotoren sind gut bekannt. Dies schließt katalytisch aktive Dieselpartikelfilter ein, wobei katalytische Beschichtungen auf Partikelfiltern für Dieselabgasreinigungsverfahren meist oxidationskatalytische Beschichtungen sind, die vor allem dazu dienen, die Verbrennung der auf dem Filter abzuscheidenden Rußpartikel zu erleichtern und so die Rußzündtemperatur abzusenken. Durch die Absenkung der Rußzündtemperatur wird die für den Filter charakteristische "Balance Point Temperature" (BPT) abgesenkt. Mit "Balance Point Temperature" (BPT) wird die Temperatur bezeichnet, bei der die Menge der im Filter akkumulierten Partikel pro Zeiteinheit der Menge der abgebrannten Partikel pro Zeiteinheit entspricht. Die BPT ist eine für das katalytisch aktivierte Filter charakteristische Größe, die vom gewählten Betriebspunkt des Motors bzw. von der Abgastemperatur, dem Abgasmassenstrom und der Zusammensetzung des Abgases am Eintritt des Filters abhängt.

Die WO 00/29726 beschreibt eine Vorrichtung zur Reinigung von Dieselabgasen, in der ein katalytisch aktives Filter enthalten ist. Das Filter umfaßt einen ersten Katalysator, der ein erstes Platingruppenmetall und eine erste Cerverbindung enthält. Die Vorrichtung enthält außerdem einen zweiten Katalysator, der eine zweite Cerverbindung enthält. Es sind Ausführungsformen beschrieben, in denen beide Katalysatoren auf dem Filtersubstrat angeordnet sind. Das System zeichnet sich dadurch aus, daß mit Hilfe der im zweiten Katalysator enthaltenen Cerverbindung der den Rußpartikeln anhaftende Anteil an flüchtigen organischen Bestandteilen ("volatile organic fraction" VOF) in der Dieselpartikelmasse durch Oxidation entfernt werden kann. Daher wird in den besonders bevorzugten Ausführungsformen der zweite Katalysator vor dem katalytisch aktiven Dieselpartikelfilter angeordnet.

WO 02/26379 der Anmelderin beschreibt ein Verfahren zur Verminderung von Kohlenmonoxid, Kohlenwasserstoffen und Rußpartikeln im Abgas von Magermotoren unter Verwendung eines Partikelfilters, wobei die Rußpartikel eine Rußzündtemperatur Tz aufweisen und das Partikelfilter von Zeit zu Zeit durch Anheben der Temperatur des Partikelfilters über die Rußzündtemperatur und Verbrennen der Rußpartikel regeneriert wird. Das verwendete Partikelfilter ist mit einer katalytisch aktiven Beschichtung versehen, die zur Verminderung der Zündtemperatur des Rußes wenigstens eine Sauerstoff-speichernde Komponente und wenigstens eines der Platingruppenmetalle Platin, Palladium und Rhodium enthält. In einer bevorzugten Ausführungsform des Partikelfilters enthält die Beschichtung eine zweite Gruppe von Verbindungen, die zur Oxidation von Kohlenmonoxid und Kohlenwasserstoffen dient und mindestens eines der Platingruppenmetalle Platin, Palladium und Rhodium geträgert auf einem Trägermaterial ausgewählt aus der Gruppe bestehend aus Aluminiumoxid, Siliziumdioxid, Titandioxid, Zirkonoxid, Zeolith oder Mischungen davon enthält. Die beiden Stoffgruppen werden bevorzugt in zwei getrennten, übereinander liegenden Schichten angeordnet, wobei die oxidationskatalytisch aktive Beschichtung direkt auf den Anströmkanälen des Filtersubstrats aufgebracht ist und die die Rußzündtemperatur vermindernde Beschichtung darüber angeordnet ist, so daß das zu reinigende Abgas zuerst in Kontakt mit der die Rußzündtemperatur absenkenden Beschichtung kommt.

Der Absenkung der Rußzündtemperatur kommt beim Einsatz von Partikelfiltern zur Reinigung von Dieselabgasen besondere Bedeutung zu, da infolge des "kalten" Verbrennungsprofils im Dieselmotor die Erzeugung von Temperaturen oberhalb von 400°C in der nachgeordneten Abgasanlage häufig schwierig ist. Dementsprechend gibt es eine Vielzahl weiterer Patentanmeldungen, die Partikelfilter mit oxidationskatalytisch aktiver Beschichtung und/oder Rußzündtemperatur-absenkender Beschichtung zum Gegenstand haben. In einigen Anmeldungen, wie beispielsweise der US 2006/0057046 A1 wird darüber hinaus der Abgasgegendruckproblematik von Filtersubstraten Rechnung getragen. Hierbei wird durch besondere räumliche Anordnungen der katalytischen Beschichtung ein möglichst gleichmäßiger Durchfluß des Abgases durch die Filterwände über die gesamte Länge des Bauteils erzeugt.

Bei der Entfernung von Partikeln aus dem Abgas überwiegend stöchiometrisch betriebener Benzinmotoren gibt es wesentliche Unterschiede hinsichtlich der Abgastemperatur, der Abgaszusammensetzung und der Beschaffenheit der Partikel. Diese müssen in einem geeigneten Abgasreinigungskonzept abgebildet werden.

Wie bereits beschrieben, weisen Partikel in den Emissionen eines Benzinmotors eine deutlich kleinere durchschnittliche Partikelgröße auf. Dies führt dazu, daß nicht alle im Stand der Technik bekannten Filterkörper zur möglichst vollständigen Reinigung des Abgases von Partikelemissionen geeignet sind, sondern Substrate verwendet werden müssen, die auch für Feinstpartikel nicht durchgängig sind. Dementsprechend beschreibt die US 2006/0133969 A1 ein Abgassystem für Verbrennungsmotoren, das ein katalysiertes keramisches Wandflußfilter enthält, welches mit einer Washcoat-Komposition versehen ist, die einen Oxidationskatalysator und ein Stickoxid-Adsorber umfaßt, wobei das unbeschichtete keramische Wandflußfilter eine Porosität > 40 % und eine durchschnittliche Porengröße von 8 - 25 µm hat und die Washcoat-Komposition einen D50 kleiner/gleich 8 µm aufweist. Die Washcoat-Komposition umfaßt Platin und/oder Palladium als oxidationskatalytisch aktive Komponente und ein Metall ausgewählt aus der Gruppe der Alkalimetalle, der Erdalkalimetalle und der Selten-ErdMetalle oder Mischungen davon als Stickoxid-Adsorber. In einer Ausführungsform ist auf den Ausgangskanälen des Filters Rhodium aufgebracht. Das in der US 2006/0133969 beschriebene katalytisch aktivierte Filter ist eine "NOₓ-Partikel-Falle" ("NOₓ particulate trap" NPT), die sich insbesondere zur Entfernung von Partikeln und Stickoxiden aus dem Abgas überwiegend mager betriebener Diesel- und Benzinmotoren eignet und zyklisch mit Wechseln aus fettem und mageren Abgas zu betreiben ist.

Benzinmotoren, die mit einem überwiegend stöchiometrischen Luft/Kraftstoff-Gemisch betrieben werden, weisen meist wesentlich höhere Abgastemperaturen auf als Magermotoren. Daher muß sich ein katalytisch beschichtetes Partikelfilter, das zur Reinigung von Abgasen überwiegend stöchiometrisch betriebener Verbrennungsmotoren eingesetzt wird, vor allem durch eine hohe thermische Alterungsstabilität auszeichnen. Insbesondere muß eine derartige Partikelfalle bei hinreichender katalytischer Aktivität Temperaturen bis 1100°C auch über einen längeren Zeitraum und starken Temperaturwechseln standhalten. Die aus dem Stand der Technik bekannten katalytisch aktivierten Dieselpartikelfilter genügen diesen Anforderungen in der Regel nicht.

EP 1 300 193 A1 der Anmelderin beschreibt ein Verfahren zur katalytischen Umsetzung von Schadstoffen im Abgas von Verbrennungsmotoren, wobei das Abgas durch eine gegebenenfalls beidseitig katalytisch beschichtete poröse Tragkörperwand mit offener Porenstruktur hindurchtritt. Dabei kann der Tragkörper selbst aus katalytisch aktivem Material bestehen. Eine besondere Ausführungsform des Verfahrens eignet sich zur Reinigung der Abgase von stöchiometrisch betriebenen Verbrennungsmotoren. Dabei wird ein Substrat mit einer nicht näher spezifizierten Dreiwegekatalysatorbeschichtung versehen, die simultan Stickoxide, Kohlenwasserstoffe und Kohlenmonoxid umsetzen kann.

DE 199 01760 A1 offenbart ein Verfahren sowie eine Anordnung zum Reinigen eines in einem Abgasstrang strömenden Abgasstromes eines Ottomotors.

Es ist Aufgabe der vorliegenden Erfindung, eine Verwendung einer Abgasreinigungsanlage zur Verfügung zu stellen, die Partikel und die gasförmigen Schadstoffe Kohlenwasserstoffe (HC), Kohlenmonoxid (CO) und Stickoxide (NOₓ) aus dem Abgas überwiegend stöchiometrisch betriebener Verbrennungsmotoren entfernt und eine hinreichende thermische Alterungsstabilität bei Temperaturen bis 1 100°C und hoher Temperaturwechselbeständigkeit aufweist. Ferner ist es Aufgabe der vorliegenden Erfindung, eine Verwendung einer Abgasreinigungsanlage zur Entfernung von Partikeln, Kohlenwasserstoffen (HC), Kohlenmonoxid (CO) und Stickoxiden (NOₓ) zur Verfügung zu stellen, womit die Abgase überwiegend stöchiometrisch betriebener Verbrennungsmotoren in der Weise gereinigt werden, daß künftige gesetzliche Abgasnormen eingehalten werden können.

Diese Aufgabe wird gelöst durch die Verwendung gemäss dem Anspruch 1.

Ein wesentlicher Unterschied zwischen dem Abgas von Magermotoren und überwiegend stöchiometrisch betriebenen Benzinmotoren liegt im Sauerstoffgehalt des Abgases. Während im Abgas von Magermotoren bis zu 15 Vol.-% Sauerstoff enthalten sein können, zeichnet sich das Abgas von überwiegend stöchiometrisch betriebenen Benzinmotoren in der Regel durch geringe Sauerstoffgehalte aus. Infolgedessen ist die Verwendung einer die Rußzündtemperatur absenkenden Beschichtung auf einem Filtersubstrat weitgehend wirkungslos, da das Abgas nicht ausreichend Oxidationsmittel für einen Rußabbrand bei abgesenkter Temperatur enthält. Da andererseits im Abgas von überwiegend stöchiometrisch betriebenen Verbrennungsmotoren nur geringe Rußmengen vorhanden sind, ist das verwendete Filter so zu gestalten, daß mit den regulär vorhandenen Sauerstoffmengen von etwa 0,7 Vol.-% bei Temperaturen oberhalb der Rußzündtemperatur möglichst viel Ruß permanent abgebrannt werden kann. Erfindungsgemäß enthalten beide Schichten zusätzlich ein Sauerstoff speicherndes Cer/Zirkon-Mischoxid. Um gute HC- und CO-Umsätze insbesondere in leicht fetten Betriebszuständen oder in mit Ruß beladenem Zustand des Filters zu erzielen, ist es wesentlich, daß nur die zweite Schicht zusätzlich ein Sauerstoff speicherndes Cer/Zirkon-Mischoxid enthält (nicht erfindungsgemäß).

Als Trägeroxid für das katalytisch aktive Edelmetall werden ein aktives Aluminiumoxid und gegebenenfalls Sauerstoff speichernde Cer/Zirkon-Mischoxide verwendet. Bevorzugt werden aktive Aluminiumoxide eingesetzt, die mit 1 bis 10 Gew.-% Lanthanoxid, bezogen auf das Gesamtgewicht des Aluminiumoxids, stabilisiert sind. Diese meist dotierten Aluminiumoxide weisen eine deutlich höhere Oberflächenstabilität bei hohen Temperaturen auf als reines Aluminiumoxid.

Auf das aktive Aluminiumoxid der ersten Schicht wird Palladium aufgebracht. Nach dem in der US 6,103,660 beschriebenen Verfahren wird Palladium bevorzugt ausgehend von Palladiumnitrat unter Verwendung von Bariumhydroxid oder Strontiumhydroxid als Base abgeschieden. Mit der so erhaltenen Suspension kann der Filterkörper sofort beschichtet werden. Die aufgebrachte Schicht wird anschließend getrocknet und gegebenenfalls kalziniert. Dabei wird die Menge des Palladiums in der Suspension bzw. die Menge der Beschichtungssuspension so gewählt, daß die Konzentration des Palladiums in der ersten Schicht nach Trocknung und Kalzination zwischen 0,1 und 10 g/L, bevorzugt zwischen 0,5 und 8 g/L, bezogen auf das Volumen des Partikelfilters, liegt.

Die Verwendung von Bariumhydroxid oder Strontiumhydroxid als Base für die Fällung von Palladiumnitrat führt nach Kalzination zum Verbleib von Bariumoxid oder Strontiumoxid, welches auf der Oberfläche des aktiven Aluminiumoxid in der ersten Schicht abgeschieden ist.

Alternativ zur beschriebenen Vorgehensweise können die Edelmetalle auch auf jeder Feststoffkomponente des Katalysators separat abgeschieden werden. Erst danach werden dann zum Beispiel mit Palladium oder Rhodium aktiviertes Aluminiumoxid oder mit Rhodium und/oder Palladium aktiviertes Cer/Zirkon-Mischoxid in den für die herzustellende Schicht benötigten Verhältnissen in Wasser suspendiert und auf den Filterkörper aufgebracht. Eine solche Vorgehensweise ermöglicht es, die Konzentration der katalytisch aktiven Edelmetalle auf Aluminiumoxid einerseits und Cer/Zirkon-Mischoxid andererseits gezielt einzustellen, was insbesondere für die Alterungsstabilität der zweiten, Rhodium-haltigen Schicht vorteilhaft sein kann. Bevorzugt wird für die separate Abscheidung der Edelmetalle auf Aluminiumoxid und/oder Cer/Zirkon-Mischoxid das in der EP 0 957 064 beschriebene Verfahren angewendet.

Unabhängig von der Art der Einbringung des Edelmetalls in der zweiten Schicht sind die Rhodiummenge in der Beschichtungssuspension und die Menge der Beschichtungssuspension selbst so zu wählen, daß die Konzentration des Rhodiums in der zweiten Schicht des fertigen Partikelfilters zwischen 0,01 und 1 g/L, bevorzugt zwischen 0,03 und 0,5 g/L liegt, bezogen auf das Volumen des Partikelfilters.

Die tatsächlich zu verwendenden Edelmetallkonzentrationen werden in erster Linie von den gewünschten Umsatzraten für die gasförmigen Schadstoffe Kohlenmonoxid (CO), Kohlenwasserstoffe (HC) und Stickoxide (NOₓ) bestimmt. Sie haben jedoch auch Einfluß auf die BPT des resultierenden katalytisch aktivierten Partikelfilters. Bei besonderen Anforderungen an Aktivität und Alterungsstabilität können spezielle Ausführungsformen des katalytisch aktiven Filters in einer oder in beiden Schichten zusätzlich zu Palladium bzw. Rhodium Platin enthalten. Bevorzugt wird dann das aktive Aluminiumoxid der ersten Schicht und/oder das aktive Aluminiumoxid der zweiten Schicht und/oder das Sauerstoff speichernde Cer/Zirkon-Mischoxid zusätzlich mit Platin katalytisch aktiviert. Dabei wird die Konzentration des Platins so gewählt, daß sie in der ersten Schicht und/oder in der zweiten Schicht je 0,01 bis 10 g/L beträgt, jeweils bezogen auf das Volumen des Partikelfilters.

Zur weiteren Verbesserung der Lebensdauer des katalytisch aktiven Filters, insbesondere im Hinblick auf Temperaturstabilität und Temperaturwechselbeständigkeit, kann der Zusatz oxidischer Hilfsstoffe in den Beschichtungen vorteilhaft sein. So enthalten bevorzugte Ausgestaltungen des erfindungsgemäß verwendeten Partikelfilters in der ersten Schicht zusätzlich Lanthanoxid oder Neodymoxid und/oder in der zweiten Schicht zusätzlich Zirkonoxid. Das Zirkonoxid ist bevorzugt mit 1 bis 30 Gew.-% Seltenerdmetalloxid, bezogen auf das Gesamtgewicht des Zirkonoxids stabilisiert, wobei in besonders gut geeigneten Ausführungsformen nicht mehr als 15 Gew.-% Ceroxid, bezogen auf das Gesamtgewicht des stabilisierten Zirkonoxids enthalten sind.

Das verwendete Partikelfilter kann neben Partikel auch die gasförmigen Schadstoffe Kohlenwasserstoff (HC), Kohlenmonoxid (CO) und Stickoxide (NOₓ) aus dem Abgas entfernen. Da das Abgas überwiegend stöchiometrisch betriebener Verbrennungsmotoren mit maximal 0,7 Vol.-% O₂ nur geringe Mengen Sauerstoff enthält, ist die Wahl eines geeigneten Sauerstoffspeichermaterials bedeutend. Um ein optimales Gleichgewicht zwischen effektivem Rußabbrand einerseits und möglichst hoher Dreiwegeaktivität andererseits zu erreichen, kann die erste, Palladium-haltige Schicht frei sein von einem Sauerstoff speichernden Cer/Zirkon-Mischoxid (nicht gemäß der beanspruchten Erfindung). Die zweite, Rhodium-haltige Schicht enthält ein Sauerstoff speicherndes Cer/Zirkon-Mischoxid und gewährleistet somit die zur Umsetzung der gasförmigen Schadstoffe CO, HC und NOₓ notwendige Dreiwegekatalysator-Aktivität des katalytisch aktivierten Partikelfilters. Dabei wird in der zweiten Schicht bevorzugt ein Cer/Zirkon-Mischoxid eingesetzt, das mit 1 bis 15 Gew.-% Metalloxiden, besonders bevorzugt 5 bis 10 Gew.-%, bezogen auf das Gesamtgewicht des Mischoxids, stabilisiert ist. Dabei handelt es sich bevorzugt um Oxide der Metalle ausgewählt aus der Gruppe bestehend aus Eisen, Mangan, Titan, Silizium, Zinn, Yttrium, Lanthan, Praseodym, Neodym, Samarium oder Mischungen davon. Gut geeignet sind Cer/Zirkon-Mischoxide mit einem Gewichtsverhältnis Ceroxid zu Zirkonoxid von 1 bis 0,1, insbesondere von 0,8 bis 0,2. Die spezifische Oberfläche dieser Materialien liegt vorteilhafterweise im Bereich zwischen 50 und 100 m²/g.

Die im Abgas von überwiegend mit stöchiometrischem Luft/Kraftstoff-Gemisch betriebenen Verbrennungsmotoren enthaltenen Partikel weisen in der Regel kleinere mittlere Partikelgrößen auf als die im Abgas von Dieselmotoren enthaltenen Partikel. Dies muß bei der Auswahl des Filterkörpers berücksichtigt werden. Geeignet sind Filterkörper ausgewählt aus der Gruppe der keramischen Wandflußfiltersubstrate, der Sintermetallfilterkörper und der keramischen und metallischen Schaumstrukturen. Insbesondere bei Schaumstrukturen und Sintermetallfilterkörpern darf zur Erzielung einer adäquaten Filterwirkung die Porengröße nicht zu groß gewählt werden. Bevorzugt ist der Filterkörper ausgewählt aus der Gruppe der keramischen Wandflußfiltersubstrate. Insbesondere eignen sich keramische Wandflußfiltersubstrate, deren Wände eine offenporige Struktur mit einer Porosität von 40 bis 80 %, bevorzugt 45 bis 65 %, und einen mittleren Porendurchmesser von 9 bis 30 Micrometern aufweisen. Besonders bevorzugt sind Wandflußfiltersubstrate mit einem mittleren Porendurchmesser von 9 bis 22 µm, und bei besonders feinen Partikeln 9 bis 18 µm.

Auf den Filterkörper des verwendeten katalytisch aktiven Partikelfilters sind zwei katalytisch aktive Schichten aufgebracht. Die Anordnung der Schichten ist nicht beliebig, sondern muß so gewählt werden, daß die hohen Anforderungen an die Alterungsbeständigkeit bei möglichst geringer Erzeugung von Abgasgegendruck durch das Bauteil erfüllt werden können. Folgende Punkte sind bei der Wahl der Beschichtungsanordnung besonders zu bedenken:
- Das katalytisch beschichtete Filter soll auch nach einer längeren thermischen Belastung bei Temperaturen von bis zu 1100°C gute CO-, HC- und NOₓ-Umsätze bei einem Sauerstoffgehalt von maximal 0,7 Vol% im Abgas zeigen. Die erforderliche hohe Dreiwege-Aktivität des katalytisch aktiven Partikelfilters nach thermischer Alterung läßt sich bei räumlicher Trennung der katalytisch aktiven Komponenten Palladium und Rhodium erreichen. Räumliche Nähe der beiden Edelmetalle kann bei höheren Temperaturen zur Ausbildung von weniger katalytisch aktiven Legierungen führen.
- Um den Abgasgegendruck, der durch das Bauteil erzeugt wird und zu Einbußen in der für den Antrieb nutzbaren Motorleistung führt, zu minimieren, müssen die Schichten so angeordnet sein, daß sie dem Abgas so wenig Strömungswiderstand wie möglich entgegensetzen. Trotzdem müssen die Kontaktzeiten des Abgases mit den katalytisch aktiven Komponenten lang genug sein, um auch bei hohen Raumgeschwindigkeiten hinreichende Raum-Zeit-Ausbeuten zu gewährleisten.

Das verwendete katalytisch aktive Partikelfilter enthält in einer ersten Schicht Palladium als katalytisch aktive Komponente, die zweite katalytisch aktive Schicht Rhodium.

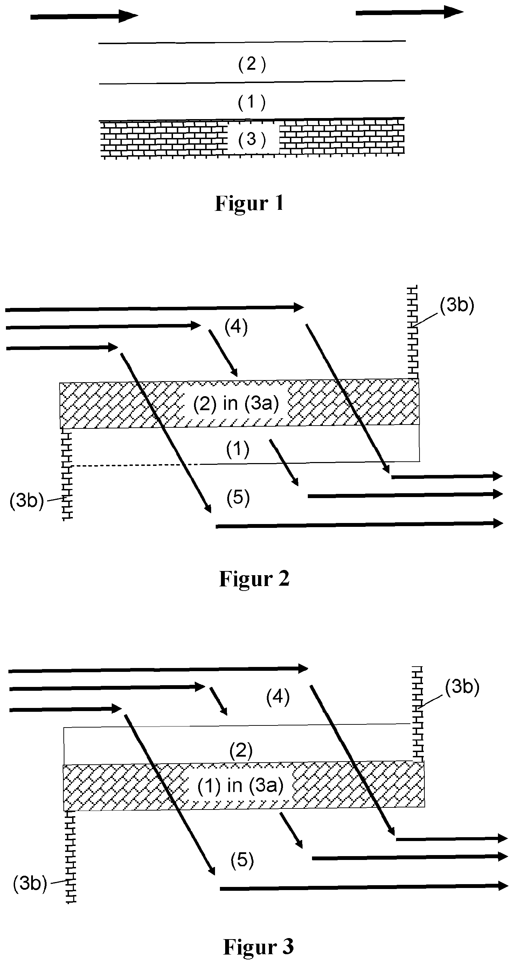

In einer Ausgestaltung des verwendeten Partikelfilters wird der Filterkörper als Tragkörper für die erste, Palladium-haltige Schicht verwendet. Der mit der ersten Schicht versehene Filterkörper dient dann als Tragkörper für die zweite, Rhodium-haltige Schicht, die im Ergebnis so angeordnet ist, daß sie mit dem anströmenden Abgas in direktem Kontakt steht und gleichzeitig die erste Schicht vollständig überdeckt. Figur 1 zeigt schematisch die entsprechende Schichtanordnung, wobei (1) die Palladium-haltige, erste Schicht, (2) die Rhodium-haltige, zweite Schicht und (3) die gegebenenfalls gasdichte Wand des Filterkörpers bezeichnet.

Wird ein keramisches Wandflußfiltersubstrat als Filterkörper verwendet, so wird in den bevorzugten Ausgestaltungen der Erfindung die Beschichtung ganz oder wenigstens teilweise in den porösen Wänden des Wandflußfiltersubstrates angeordnet. Eine solche Maßnahme trägt dazu bei, den vom resultierenden erfindungsgemäß verwendeten Bauteil erzeugten Abgasgegendruck zu minimieren.

Figur 2 zeigt eine bevorzugte Ausgestaltung des verwendeten Partikelfilters, worin die zweite, Rhodium-haltige Schicht (2) über die gesamte Länge des Bauteils in die Poren der Wände eines keramischen Wandflußsfiltersubstrats eingebracht und homogen in der Wand verteilt ist. Die erste, Palladium-haltige Schicht (1) ist in den Abströmkanälen (5) auf die Wand aufgebracht. Im Wandflußfiltersubstrat ist der Anströmkanal (4) auf der Abströmseite, der Abströmkanal (5) auf der Anströmseite gasdicht verschlossen (3b), so daß das Abgas zum Durchtritt durch die poröse Wand gezwungen wird. Die Pfeile zeigen den Strömungsweg des Abgases.

Figur 3 zeigt eine andere bevorzugte Ausgestaltung des erfindungsgemäß verwendeten Partikelfilters, worin die erste, Palladium-haltige Schicht (1) über die gesamte Länge des Bauteils in die Poren der Wände des keramischen Wandflußfiltersubstrates (3a) eingebracht und homogen in der Wand verteilt ist. Die zweite, Rhodium-haltige Schicht ist in den Anströmkanälen (4) auf die Wand aufgebracht.

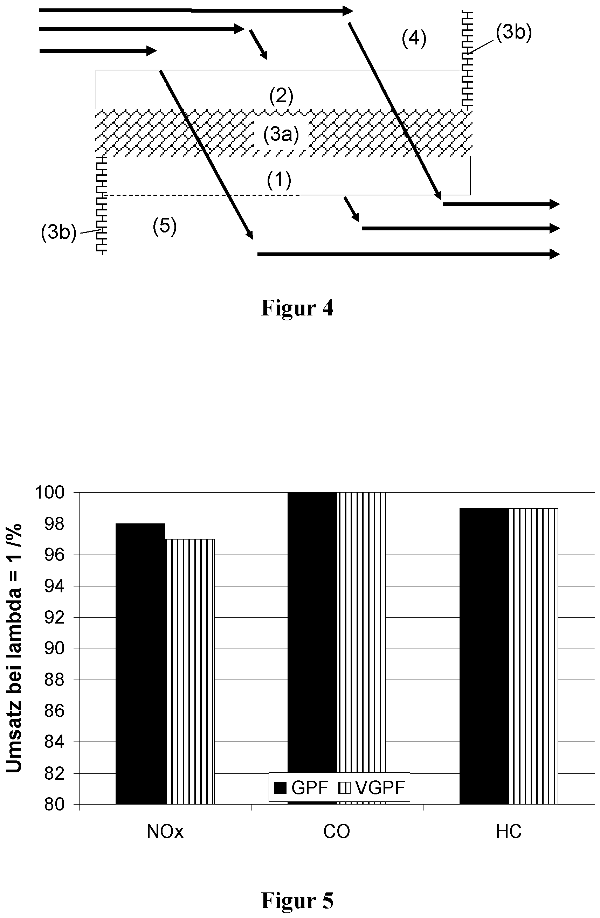

In Applikationen, in denen eine hohe Dreiwege-Aktivität nach thermischer Alterung Vorrang vor einem minimierten Abgasgegendruck des Bauteils hat, sind außerdem Ausgestaltungen des erfindungsgemäß verwendeten Partikelfilters gut geeignet, in denen die erste, Palladium-haltige Schicht (1) in den Abströmkanälen (5) auf die Wand (3a) aufgebracht ist und die zweite, Rhodium-haltige Schicht (2) in den Anströmkanälen (4) auf die Wand aufgebracht (3a) aufgebracht ist. Eine solche Ausführungsform ist schematisch in Figur 4 dargestellt.

Das erfindungsgemäß verwendete Partikelfilter kann in den beschriebenen Ausgestaltungen insbesondere zur Entfernung von Partikeln, Kohlenmonoxid (CO), Kohlenwasserstoffen (HC) und Stickoxiden (NOₓ) aus dem Abgas von mit überwiegend stöchiometrischem Luft/Kraftstoff-Gemisch betriebenen Verbrennungsmotoren verwendet werden. Dazu muß es in die entsprechende Abgasreinigungsanlage eines Fahrzeugs eingebaut werden. Um einen möglichst effektiven permanenten Rußabbrand zu gewährleisten, wird das katalytisch aktive Partikelfilter in motornaher Position angeordnet Erfindungsgemäß wird zusätzlich zum Partikelfilter einen Dreiwegekatalysator enthaltend ein keramisches oder metallisches Durchflußsubstrat und eine katalytisch aktive Beschichtung verwendet.

Der zusätzliche Dreiwegekatalysator ist anströmseitig zum verwendeten Partikelfilter angeordnet.

Erfindungsgemäß ist der Dreiwegekatalysator anströmseitig zum Partikelfilter angeordnet, wobei er weniger als 100 g/L Sauerstoff speicherndes Cer/Zirkon-Mischoxid enthält, bezogen auf das Volumen des Dreiwegekatalysators. Ein zu hoher Gehalt an Sauerstoff speicherndem Material anströmseitig zum Partikelfilter reduziert die ohnehin schon begrenzte Menge an Oxidationsmittel (Sauerstoff), die zum Partikelabbrand auf dem Filter benötigt wird, in unerwünschter Weise. Daher gehört es bei einer solchen Anordnung zu den besonders bevorzugten Ausgestaltungen der Abgasanlage, wenn ein anströmseitig zum Partikelfilter angeordneter Dreiwegekatalysator weniger als 75 g/L Sauerstoff speicherndes Cer/Zirkon-Mischoxid, bezogen auf das Volumen des Dreiwegekatalysators, mit einem Verhältnis von Ceroxid zu Zirkonoxid zwischen 0,35 und 0,1, besonders bevorzugt zwischen 0,25 und 0,15 enthält.

Nicht erfindungsgemäß ist der zusätzliche Dreiwegekatalysator abströmseitig zum Partikelfilter angeordnet, so kann der Gehalt an Sauerstoff speicherndem Cer/Zirkon-Mischoxid erhöht werden, um insbesondere in leicht fettem Abgas, das beispielsweise während der Beschleunigungsphasen des Fahrzeugs vorliegen kann, gute CO- und HC-Konvertierungsraten zu gewährleisten. In einer solchen nicht erfindungsgemäßen

Anordnung enthält der zusätzliche Dreiwegekatalysator bevorzugt mehr als 100 g/L Sauerstoff speicherndes Cer/Zirkon-Mischoxid, bezogen auf das Volumen des Dreiwegekatalysators. Besonders bevorzugt werden in einer nicht erfindungsgemäßen Anordnung Dreiwegekatalysatoren eingesetzt, die mehr als 100 g/L eines Sauerstoff speichernden Cer/Zirkon-Mischoxid mit einem Ceroxid/Zirkonoxid-Verhältnis zwischen 0,4 und 1 enthalten, bezogen auf das Volumen des Dreiwegekatalysators. Ganz besonders bevorzugt weist das Sauerstoff speichernde Cer/Zirkon-Mischoxid in einem abströmseitig zum Partikelfilter angeordneten Dreiwegekatalysator ein Ceroxid/Zirkonoxid-Verhältnis zwischen 0,5 und 0,9 auf.

So, wie das OSC-Material in einem Dreiwegekatalysator, der in der erfindungsgemäß verwendeten Abgasanlage zusätzlich zum Partikelfilter angeordnet ist, gute CO- und HC-Konversionsraten bei kurzzeitigen Belastungen mit fettem Abgas gewährleisten kann, kann es hilfreich sein, wenn der zusätzliche Dreiwegekatalysator weiterhin ein Stickoxid-Speichermaterial ausgewählt aus der Gruppe der Alkalimetalloxide, Erdalkalimetalloxide und Seltenermetalloxide oder Kombinationen davon enthält. Eine solche Ergänzung stellt sicher, daß bei kurzzeitigen Belastungen der Abgasanlage mit magerem Abgas keine unerwünschten Stickoxidemissionen auftreten.

Zur Reinigung des Abgases von mit überwiegend stöchiometrischem Luft/KraftstoffGemisch betriebenen Verbrennungsmotoren wird das Abgas zur Entfernung von Kohlenmonoxid (CO), Kohlenwasserstoffen (HC), Stickoxiden (NOₓ) und Partikeln über ein katalytisch aktives Partikelfilter geleitet. Die gasförmigen Schadgase werden unter katalytischer Wirkung der auf den Filterkörper aufgebrachten Beschichtungen zu unschädlichen Abgaskomponenten (CO₂, N₂, H₂O) umgesetzt. Die im anströmenden Abgas enthaltenen Partikel werden im Partikelfilter gesammelt und bei hinreichender Abgastemperatur und entsprechendem Oxidationsmittelangebot direkt auf der Filterbeschichtung verbrannt. Ist die in das Partikelfilter eingetragene Partikelmasse größer als die Menge der permanent abgebrannten Partikel, so kommt es mit zunehmender Agglomeration der Partikel im Filter zu einem Ansteigen des Abgasgegendruckes. Überschreitet der Abgasgegendruck einen kritischen, in der Motorsteuerung vorgegebenen Wert, müssen zusätzliche Maßnahmen zur Partikelfilterregeneration eingeleitet werden.

Die Regeneration des Partikelfilters erfolgt durch das Überleiten eines sauerstoffreichen Abgases bei Abgastemperaturen zwischen 400 und 700°C. Bei einem mit überwiegend stöchiometrischem Luft/Kraftstoff-Gemisch betriebenen Motor kann die Erzeugung des Sauerstoff-reichen Abgases beispielsweise im Wege einer Schubabschaltung erfolgen. Dabei wird die Kraftstoffzufuhr im Zylinder bei vollständig geöffneter Drosselklappe im Saugrohr kurzzeitig unterbrochen. Solche Schubabschaltungen treten bei modernen, Kraftstoff-sparenden Fahrzeugen beispielsweise immer dann auf, wenn im Fahrbetrieb eine Verzögerung durch Nutzung der sogenannten "Motorbremse" vorgenommen wird. Darüber hinaus kann die Erzeugung des zur Regeneration des Partikelfilters benötigten sauerstoffreichen Abgases durch Einblasung von Sekundärluft in den Abgasstrang erfolgen. Eine solche Verfahrensausgestaltung bietet sich bei allen Fahrzeugen an, die ohnehin eine Sekundärluftpumpe mitführen.

Die Erfindung wird anhand einiger Figuren und Beispiele näher erläutert.

Die **Figuren 1 bis 4** zeigen unterschiedliche Beschichtungsanordnungen in erfindungsgemäß verwendeten katalytisch aktiven Partikelfiltern. Darin bezeichnet
(1) die erste, Palladium-haltige Schicht;
(2) die zweite, Rhodium-haltige Schicht;
(3) die Wand des Filterkörpers;
   (3a) die poröse Wand eines Wandflußfiltersubstrats;
   (3b) den gasdichten Abschluß der Strömungskanäle in einem Wandflußfiltersubstrat;
(4) einen Anströmkanäl;
(5) einen Abströmkanal.

Die Figuren 5 bis 7 zeigen die Ergebnisse verschiedener Untersuchungen, die an einem erfindungsgemäß verwendeten Partikelfilter und Partikelfiltern nach dem Stand der Technik vorgenommen wurden. Es zeigen:
**Figur 5****:** HC-, CO- und NOₓ-Umsatz bei λ = 1 des erfindungsgemäß verwendeten Partikelfilters GPF ( 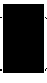 ) im Vergleich zu einem Partikelfilter nach dem Stand der Technik (VGPF (∥) aus Vergleichsbeispiel) in frisch hergestelltem und rußfreiem Zustand
**Figur 6****:** HC-, CO- und NOₓ-Umsatz bei λ = 1 des erfindungsgemäß verwendeten Partikelfilters GPF ( 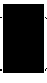 ) im Vergleich zu einem Partikelfilter nach dem Stand der Technik (VGPF (11) aus Vergleichsbeispiel) nach Hydrothermalalterung in rußfreiem Zustand
**Figur 7****:** HC-, CO- und NOₓ-Umsatz bei λ = 1 des erfindungsgemäß verwendeten Partikelfilters GPF ( 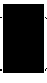 ) im Vergleich zu einem Partikelfilter nach dem Stand der Technik (VGPF (∥) aus Vergleichsbeispiel) nach Hydrothermalalterung und Aufbringen von ca. 5 g/L Ruß, bezogen auf das Volumen des katalytisch aktiven Partikelfilters

### Herstellung und Prüfung der in Beispiel und Vergleichsbeispiel beschriebenen beschichteten Partikelfilter:

Zur Herstellung der in Beispiel und Vergleichsbeispiel beschriebenen katalytisch aktiven Partikelfilter wurden Wandflußfiltersubstrate aus Aluminiumtitanat (Typ: Corning Duratrap AT) mit ovalem Querschnitt (Stirnflächendurchmesser: 10,21 cm x 19,84 cm) und einer Länge von 17,4 cm beschichtet. Die Wandflußfiltersubstrate hatten eine Zelldichte von 46,5 Zellen pro Quadratzentimeter bei einer Zellwandstärke von 0,33 mm. Sie wiesen eine Porosität von 52 % und eine Dichte von 3,5 kg/L, bezogen auf das Volumen des Filterkörpers, auf.

Im Vergleichsbeispiel wurde in den Anströmkanälen eine Beschichtungssuspension aufgebracht. Im Beispiel wurden nacheinander zwei verschiedene Beschichtungssuspensionen aufgebracht, wobei die erste Beschichtungssuspension in den Anströmkanälen angeordnet wurde. Die zweite Beschichtung wurde ebenfalls in den Anströmkanälen, d.h. die erste Schicht überdeckend, angeordnet. Nach dem Aufbringen jeder Beschichtungssuspension wurden die Teile getrocknet und bei 500°C für die Dauer von 4 Stunden kalziniert.

Den so erhaltenen Teilen wurden für die katalytische Charakterisierung jeweils zwei zylindrische Bohrkerne mit einem Durchmesser von 2,54 cm und einer Länge von 17,4 cm entnommen.

Jeweils einer der so erhaltenen Prüflinge wurde zunächst im frisch hergestellten, rußfreien Zustand an einer Modellgasanlage einem "lambda-Sweeptest" nach den üblichen, dem Fachmann geläufigen Prüfverfahren unterzogen.

Der jeweils verbleibende Prüfling wurde vor der Charakterisierung der katalytischen Eigenschaften über die Dauer von 16 Stunden einer Temperatur von 925°C in einer Atmosphäre enthaltend 10 Vol.-% Sauerstoff und 10 Vol.-% Wasserdampf in Stickstoff ausgesetzt. Die so gealterten Teile wurden ebenfalls einem "lambda-Sweeptest" unterzogen.

Anschließend wurden diese Teile bei Raumtemperatur gezielt mit Ruß beladen. Dazu wurde kommerziell erhältlicher Ruß (Hersteller: degussa.) durch Durchleiten von Luft aufgewirbelt und durch das Filter geblasen, bis eine Menge von 5 g/L Ruß, bezogen auf das Volumen des Prüflings eingebracht waren. Es erfolgte eine erneute Vermessung im "lambda-Sweeptest".

In allen Fällen wurden im "lambda-Sweeptest" die folgenden Parameter eingestellt:

| **Modellgaszusammensetzung** | |
|---|---|
| CO-Konzentration: | 1,4 Vol.-% |
| HC-Konzentration (C₃H₈ : C₃H₆ = 2 : 1): | 500 Vppm |
| NOₓ-Konzentration: | 1000 Vppm |
| mittlere O₂-Konzentration: | 0,9 Vol.-% |
| lambda-Wert: | 0,98 - 1,01 |

| **Sonstige Meßparameter** | |
|---|---|
| Temperatur vor Katalysator: | 350°C |
| lambda-Wechselfrequenz: | 1 Hz |
| Amplitude: | 0,5 A/F |
| Raumgeschwindigkeit GHSV: | 25.000 h⁻¹ |

### Vergleichsbeispiel :

Nach Auflösen von Bariumhydroxid in Wasser wurde ein Cer/Zirkon-Mischoxid mit einem Ceroxid-Gehalt von 20 Gew.-%, bezogen auf die Gesamtmenge des Cer/Zirkon-Mischoxids, suspendiert und durch Zugabe von Rhodiumnitratlösung unter ständigem Rühren mit Rhodium aktiviert. Danach wurden ein mit 3 Gew.-% Lanthanoxid stabilisiertes Aluminiumoxid (spezifische Oberfläche: 140 g/m²) und ein weiteres Cer/Zirkon-Mischoxid mit einem Ceroxid-Gehalt von 40 Gew.-%, bezogen auf das Gesamtgewicht des Cer-Zirkon-Mischoxids, zur Suspension hinzugegeben. Sodann erfolgte die Zugabe von Palladiumnitratlösung unter ständigem Rühren. Die resultierende Beschichtungssuspension wurde direkt zur Beschichtung eines Wandflußfiltersubstrats eingesetzt. Die Suspension wurde nur in den Anströmkanälen des Filterkörpers aufgebracht. Das beschichtete Filter wurden getrocknet und kalziniert. Das fertige katalytisch aktive Partikelfilter enthielt in den Anströmkanälen eine Beschichtung mit der folgenden Zusammensetzung:

| | | |
|---|---|---|
| 14 | g/l | Cer/Zirkon-Mischoxid mit 20 Gew.-% Ceroxid |
| 28 | g/l | mit Lanthan stabilisiertes Aluminiumoxid |
| 14 | g/l | Cer/Zirkon-Mischoxid mit 40 Gew.-% Ceroxid |
| 2 | g/l | Bariumoxid |
| 1,236 | g/l | Palladium (auf allen Komponenten) |
| 0,176 | g/l | Rhodium (auf Cer/Zirkon-Mischoxid mit 20 Gew.-% CeO₂) |

Die Gesamtedelmetallbeladung des so erhaltenen katalytisch aktiven Partikelfilters VGPF betrug 1,412 g/l mit einem Verhältnis von Palladium zu Rhodium von 7 : 1.

### Beispiel:

### Anfertigen der ersten Schicht:

Ein mit 3 Gew.-% Lanthanoxid stabilisiertes Aluminiumoxid (spezifische Oberfläche 140 m²/g) und ein Cer/Zirkon-Mischoxid mit einem Ceroxidgehalt von 40 Gew.-% wurden gemäß US 6,103,660 unter Verwendung von Bariumhydroxid als Base gemeinsam mit Palladium ausgehend von Palladiumnitrat aktiviert. Die resultierende Suspension wurde direkt zur Beschichtung des Wandflußfiltersubstrats eingesetzt. Die Suspension wurde nur in den Anströmkanälen des Filterkörpers aufgebracht. Nach der Beschichtung wurde das Filter getrocknet und kalziniert. Die fertige erste Schicht enthielt die folgenden Beschichtungsmengen:

| | | |
|---|---|---|
| 10 | g/l | mit Lanthan stabilisiertes Aluminiumoxid |
| 10 | g/l | Cer/Zirkon-Mischoxid mit 40 Gew.-% Ceroxid |
| 1 | g/l | Bariumoxid |
| 1,236 | g/l | Palladium (auf allen Komponenten) |

### Anfertigen der zweiten Schicht:

Ein Cer/Zirkon-Mischoxid mit einem Ceroxidgehalt von 20 Gew.-% wurde in Wasser suspendiert. Danach wurde der Suspension eine wäßrige Lösung von Rhodiumnitrat unter ständigem Rühren zugeführt und ein mit 3 Gew.-% Lanthanoxid stabilisiertes Aluminiumoxid (spezifische Oberfläche: 140 m²/g) hinzugegeben. Das schon mit der ersten Schicht in den Anströmkanälen versehene Wandflußfiltersubstrat wurde mit der zweiten Beschichtungssuspension beschichtet, wobei die zweite Schicht ebenfalls in die Anströmkanäle eingebracht wurde. Das Filter wurde getrocknet und kalziniert. Die fertige zweite Schicht enthielt die folgenden Beschichtungsmengen:

| | | |
|---|---|---|
| 10 | g/l | mit Lanthan stabilisiertes Aluminiumoxid |
| 10 | g/l | Cer/Zirkon-Mischoxid mit 20 Gew.-% Ceroxid |
| 0,176 | g/l | Rhodium (auf Cer/Zirkon-Mischoxid mit 20 Gew.-% CeO₂) |

Die gesamte Edelmetallbeladung des so hergestellten katalytisch aktiven Partikelfilters GPF betrug 1,412 g/l mit einem Verhältnis von Palladium zu Rhodium von 7 : 1.

### Ergebnisse der katalytischen Charakterisierung im "lambda-Sweeptest":

Wie bereits beschrieben wurden den hergestellten katalytisch aktiven Partikelfiltern jeweils zwei zylindrische Bohkerne mit einem Durchmesser von 2,54 cm und einer Länge von 17,4 cm entnommen. Jeweils einer der Prüflinge wurde in frisch hergestelltem Zustand rußfrei untersucht. Der jeweils verbleibende Bohrkern wurde zunächst bei 925°C für die Dauer von 16 Stunden in einer Atmosphäre enthaltend 10 Vol.-% Wasserdampf und 10 Vol.-% Sauerstoff synthethisch gealtert und dann in rußfreiem und in mit Ruß beladenem Zustand vermessen.

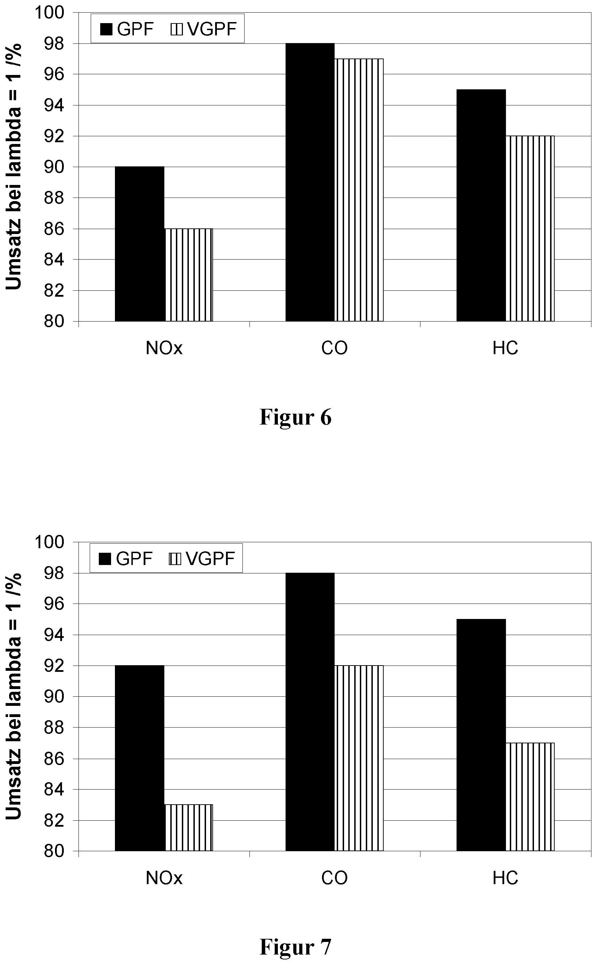

Die Ergebnisse der "lambda-Sweeptests" sind in den Figuren 5 bis 7 dargestellt. Figur 5 zeigt die CO-, HC- und NOₓ-Umsätze an den frisch hergestellten katalytisch aktiven Partikelfiltern bei λ = 1. Es ist offenkundig, daß das erfindungsgemäß verwendete katalytisch aktive Partikelfilter GPF im frischen Zustand kaum Vorteile gegenüber dem nach dem Stand der Technik hergestellten Partikelfilter VGPF zeigt.

Die Vorteile des erfindungsgemäßen Partikelfilters zeigen sich erst nach thermischer Alterung. Bereits im rußfreien Zustand werden deutlich bessere Schadgasumsätze beobachtet. Nach Beladung mit Ruß sind die Umsätze der drei gängigen Schadgase NOₓ, CO und HC am erfindungsgemäß verwendeten Filter GPF deutlich höher am beschichteten Partikelfilter nach dem Stand der Technik VGPF. So ist der NOₓ-Umsatz des erfindungsgemäß verwendeten GPF mit 92 % um 9 % abs. höher als der des VGPF. Der HC-Umsatz liegt mit 95 % um 8 % abs. über dem des VGPF. Der CO-Umsatz von 98 % ist um 6 % abs. höher als der des beschichteten Partikelfilters nach dem Stand der Technik.

Erst die gezeigten Umsatzvorteile des erfindungsgemäß verwendeten katalytisch aktiven Partikelfilters in thermisch gealtertem Zustand schaffen die Vorraussetzungen für einen erfolgreichen Einsatz solcher Bauteile zur Entfernung von Partikeln und den herkömmlichen Schadgasen CO, HC und NOₓ aus dem Abgas von mit überwiegend stöchiometrischem Luft/Kraftstoff-Gemisch betriebenen Verbrennungsmotoren.

## Patentansprüche

1. Verwendung einer Abgasreinigungsanlage zur Reinigung der Abgase von mit überwiegend stöchiometrischem Luft/Kraftstoff-Gemisch betriebenen Verbrennungsmotoren enthaltend ein katalytisch aktives Partikelfilter enthaltend einen Filterkörper und eine katalytisch aktive Beschichtung, die aus zwei übereinander angeordneten Schichten besteht, wobei die zweite Schicht mit dem anströmenden Abgas in direktem Kontakt steht und die erste Schicht abgasseitig vollständig überdeckt,
und beide Schichten Aluminiumoxid enthalten, wobei das Aluminiumoxid in der ersten Schicht mit Palladium katalytisch aktiviert ist, während die zweite Schicht Rhodium als katalytisch aktive Komponente enthält,
und wobei beide Schichten zusätzlich ein Sauerstoffspeicherndes Cer/Zirkon-Mischoxid enthalten,
**dadurch gekennzeichnet,**
**dass** das katalytisch aktive Partikelfilter in motornaher Position angeordnet ist, und wobei ein Dreiwegekatalysator enthaltend ein keramisches oder metallisches Durchflusssubstrat und eine katalytisch aktive Beschichtung anströmseitig zum Partikelfilter angeordnet ist und weniger als 100 g/L Sauerstoff speicherndes Cer/Zirkon-Mischoxid enthält, bezogen auf das Volumen des Dreiwegekatalysators.

## Claims

1. Use of an exhaust-gas purification system for purifying the exhaust gases from internal combustion engines operated with a predominantly stoichiometric air/fuel mixture, the exhaust-gas purification system comprising a catalytically active particulate filter comprising a filter body and a catalytically active coating which consists of two layers arranged one above the other, wherein the second layer is in direct contact with the incoming exhaust-gas and completely covers the first layer on the exhaust-gas side,
and both layers comprising aluminum oxide, wherein the aluminum oxide in the first layer is catalytically activated with palladium, whereas the second layer comprises rhodium as a catalytically active component,
and wherein both layers additionally comprise an oxygen-storing cerium/zirconium mixed oxide,
**characterized in that**
the catalytically active particulate filter is arranged in a position close to the engine, and wherein a three-way catalyst comprising a ceramic or metal throughflow substrate and a catalytically active coating is arranged at the incoming side with respect to the particulate filter and comprises less than 100 g/L of oxygen-storing cerium/zirconium mixed oxide, based on the volume of the three-way catalyst.

## Revendications

1. Utilisation d'une installation d'épuration des gaz d'échappement pour l'épuration des gaz d'échappement de moteurs thermiques fonctionnant avec un mélange air/carburant principalement stoechiométrique, contenant un filtre à particules actif de manière catalytique contenant un corps de filtre et un revêtement actif de manière catalytique qui est constitué de deux couches disposées l'une sur l'autre, dans laquelle la seconde couche est en contact direct avec les gaz d'échappement affluents et recouvre complètement la première couche côté gaz d'échappement,
et les deux couches contiennent de l'oxyde d'aluminium, dans laquelle l'oxyde d'aluminium de la première couche est activé de manière catalytique par du palladium, tandis que la seconde couche contient du rhodium comme composant actif de manière catalytique,
et dans laquelle les deux couches contiennent en outre un oxyde mixte de cérium/zirconium qui stocke l'oxygène,
**caractérisé en ce**
**que** le filtre à particules actif de manière catalytique est disposé dans une position proche du moteur, et dans laquelle un catalyseur à trois voies contient un substrat d'écoulement céramique ou métallique et un revêtement actif de manière catalytique est disposé côté affluent du filtre à particules et contient moins de 100 g/L d'oxyde mixte de cérium/zirconium stockant de l'oxygène, par rapport au volume du catalyseur à trois voies.
